# FASCICULE DE BREVET EUROPEEN

(11) **EP 3 720 698 B1**
(45) Date de publication et mention de la délivrance du brevet: **19.10.2022**
(21) Numéro de dépôt: 18826432.9
(22) Date de dépôt: 06.12.2018
(51) Int. Cl.: B32B 5/02, B32B 5/12, B32B 5/26, B32B 7/02, F01D 11/12, G10K 11/16

(54) **REVÊTEMENT A GRADIENT DE PROPRIÉTÉ POUR PAROI INTERNE DE TURBOMACHINE**
BESCHICHTUNG MIT EINEM EIGENSCHAFTSGRADIENTEN FÜR DIE INNENWAND EINER TURBOMASCHINE
COATING WITH PROPERTY GRADIENT FOR INNER WALL OF TURBOMACHINE

(30) Priorité: 06.12.2017 FR 1761722; 06.12.2017 CA 2988224
(43) Date de publication de la demande: 14.10.2020
(73) Titulaire: Safran Aircraft Engines, 75015 Paris (FR)
(72) Inventeur: MARDJONO, Jacky, Novi, 77550 Moissy-Cramayel (FR); DUBOURG, Arnaud, Montréal, Québec H3W 1T5 (CA); FOTSING, Edith-Roland, Montréal, Québec H3C 3A7 (CA); ROSS, Annie, Montréal, Québec H3C 3A7 (CA)
(74) Mandataire: Cabinet Beau de Loménie
(86) Numéro de dépôt international: PCT/FR2018/053128
(87) Numéro de publication internationale: WO 2019/110934

(56) Documents cités:
- FR-A1- 2 996 874
- US-A1- 2004 022 625

## Description

### Arrière-plan de l'invention

La présente invention se rapporte au domaine général de la fabrication de pièces en matériaux polymères, notamment thermodurcissables, de pièces métalliques, en alliage métallique ou en céramique par fabrication additive et elle concerne plus particulièrement, mais non exclusivement, la fabrication de revêtements abradables présentant des fonctionnalités acoustiques, notamment pour carter de soufflante.

Le contrôle des nuisances sonores dues aux avions aux alentours des aéroports est devenu en enjeu de santé public. Des normes et règlements de plus en plus sévères sont imposés aux fabricants d'avions et aux gestionnaires d'aéroports. Par conséquent, construire un avion silencieux est devenu au fil des années un argument de vente marquant. Actuellement, le bruit généré par les moteurs d'avions est atténué par des revêtements acoustiques à réaction localisée qui permettent de diminuer l'intensité sonore du moteur sur un ou deux octaves sur le principe des résonateurs de Helmholtz, ces revêtements se présentant classiquement sous la forme de panneaux composites composés d'une plaque rigide associée à une âme nid d'abeille recouvert d'une peau perforée et disposés au niveau de la nacelle ou des conduits de propagation amont et aval. Toutefois, dans les moteurs de nouvelle génération (par exemple dans les turbosoufflantes), les zones disponibles pour les revêtements acoustiques sont amenées à se réduire considérablement comme dans la technologie UHBR (Ultra-High-Bypass-Ratio). De plus, ces zones de carters composites sont susceptibles de présenter des défauts de forme qu'il convient de rattraper par une opération additionnelle d'usinage avant la mise en place du revêtement.

Il est donc important de proposer des nouveaux procédés et/ou de nouveaux matériaux (notamment des matériaux poreux) permettant d'éliminer ou de réduire de façon significative le niveau de bruit produit généré par les moteurs d'avion surtout dans les phases de décollage et d'atterrissage et sur une gamme fréquentielle plus large qu'actuellement incluant les basses fréquences tout en conservant les performances du moteur. C'est la raison pour laquelle on cherche aujourd'hui de nouvelles technologies de réduction de bruit pour diminuer cette nuisance ainsi que de nouvelles surfaces de traitements acoustiques et ceci avec un impact minimal sur les autres fonctionnalités du moteur comme la consommation spécifique de carburant qui constitue un avantage commercial important.

Les documents FR 2996874 A1 et US 2004/0022625 A1 décrivent des revêtements en matériaux abradables déposés sur certaines surfaces d'un ensemble de type rotor-stator pour moteur à turbines a gaz.

Or, au sein des moteurs d'avion, le bruit issu de la soufflante est un des premiers contributeurs aux nuisances sonores, favorisé par l'augmentation du taux de dilution que recherchent ces nouvelles générations d'avions.

Par ailleurs, il est aujourd'hui courant et avantageux d'avoir recours à des procédés de fabrication additive en lieu et place des procédés traditionnels de fonderie, de forge ou d'usinage dans la masse pour réaliser facilement, rapidement et à moindre coût des pièces tridimensionnelles complexes. Le domaine aéronautique se prête d'ailleurs particulièrement bien à l'utilisation de ces procédés. Parmi ceux-ci, on peut citer par exemple le procédé de dépôt énergétique direct par fil (Wire Beam Déposition).

### Objet et résumé de l'invention

La présente invention vise à proposer un nouveau revêtement permettant de réduire de manière significative le bruit généré par les turboréacteurs d'avion et notamment celui généré par l'ensemble soufflante-OGV. Un but de l'invention est également de rattraper les défauts de forme résultant de la nature composite de la paroi interne des carters sur lequel ce revêtement est destiné à être apposé.

A cet effet, il est prévu un revêtement à gradient de propriété destiné à être apposé par fabrication additive sur une paroi interne d'un carter montée en périphérie d'aubes mobiles de rotor de turbomachine, caractérisé en ce qu'il comporte en couches superposées d'une surface extérieure dudit revêtement à ladite paroi interne de carter :
- une première couche constituée par un échafaudage tridimensionnel de filaments d'un matériau abradable formant un réseau ordonné de canaux ou micro canaux dont des tailles de pores sont comprises entre 50 et 250 microns et la porosité supérieure à 85%, et
- une deuxième couche ayant une fonction de dissipation d'énergie des ondes acoustiques frappant ladite surface extérieure dudit revêtement et constituée par un échafaudage tridimensionnel de filaments d'un premier matériau thermodurcissable formant un réseau ordonné de canaux et ou micro canaux dont des tailles de pores sont comprises entre 50 et 400 microns et la porosité supérieure à 60%.

Ainsi, on obtient une microstructure poreuse à porosité régulière et ordonnée dont les propriétés peuvent être parfaitement contrôlées dans toute l'épaisseur du revêtement. Selon les couches mises en œuvre, on limite les pertes aérodynamiques radiales, on réduit la rétention fluidique et on maximise l'absorption acoustique et balistique.

De préférence, les filaments de ladite première couche sont orientés alternativement à 0° ou à 90° sans décalage dans la superposition des filaments ayant une même direction d'orientation et les filaments de ladite deuxième couche sont orientés alternativement avec une direction d'orientation des filaments décalée ou non d'un même écart angulaire, typiquement compris entre 20° et 40°.

Selon le mode de réalisation envisagé, le revêtement peut comporter en outre une couche d'un matériau de rattrapage de jeu déposé directement sur la dite paroi interne de carter pour obtenir une surface de dépôt de géométrie connue.

Selon le mode de réalisation envisagé, le revêtement peut comporter en outre une troisième couche ayant une fonction de drainage des fluides traversant ledit revêtement et constituée par un échafaudage tridimensionnel de filaments d'un deuxième matériau thermodurcissable formant un réseau ordonné de canaux ou micro canaux dont des tailles de pores sont supérieures à 250 microns et la porosité supérieure à 70%.

De préférence, ladite troisième couche comporte des motifs spécifiques avec des canaux orientant l'évacuation des fluides traversant ledit revêtement vers des zones déterminées et présentant une taille de canaux supérieure à 500 microns.

Avantageusement, les filaments de ladite troisième couche sont orientés alternativement à 0° ou à 90° sans décalage dans la superposition des filaments ayant une même direction d'orientation.

Selon le mode de réalisation envisagé, le revêtement peut comporter en outre une quatrième couche ayant une fonction d'absorption d'énergie balistique résultant d'un impact de volatile, d'une ingestion de grêle voire d'une perte d'aube et constituée par un échafaudage tridimensionnel de filaments d'un troisième matériau thermodurcissable formant un réseau ordonné de canaux ou micro canaux dont des tailles de pores sont inférieures à 400 microns et la porosité inférieure à 60%.

De préférence, les filaments de ladite quatrième couche sont orientés alternativement à 0° ou à 90° et présentent un décalage dans la superposition des filaments ayant une même direction d'orientation.

Avantageusement, le revêtement peut comporter en outre au moins une couche supplémentaire d'un matériau abradable ajoutée localement sur ladite première couche pour tenir compte d'une géométrie non axisymétrique dudit carter.

De préférence, ledit matériau abradable est un mélange thixotrope dépourvu d'un solvant et constitué d'une base polymère et d'un agent de réticulation dans un rapport pondéral de base polymère à agent de réticulation compris entre 1 : 1 et 2 : 1, et d'un composant de facilitation de l'écoulement, typiquement une gelée de pétrole présente entre 5 et 15% en poids du poids total dudit mélange thixotrope.

Avantageusement, lesdits premier, deuxième et troisième matériaux thermodurcissables sont constitués dudit matériau abradable.

De préférence, ledit carter est un carter de soufflante de turbomachine en matériau composite tissé.

### Brève description des dessins

D'autres caractéristiques et avantages de la présente invention ressortiront de la description détaillée faite ci-dessous, en référence aux figures suivantes dépourvues de tout caractère limitatif et sur lesquelles :
- La figure 1 illustre de façon schématique une architecture de turbomachine d'aéronef dans laquelle le revêtement à gradient de propriété de l'invention est mis en œuvre,
- La figure 2 illustre un système de dépôt de matière filamentaire utilisé pour la fabrication du revêtement de l'invention,
- La figure 3 est un éclaté d'un échafaudage tridimensionnel de filaments obtenu par le système de la figure 2, et
- Les figures 4A à 4D montrent un exemple des différentes couches du revêtement à gradient de propriété de l'invention.

### Description détaillée de l'invention

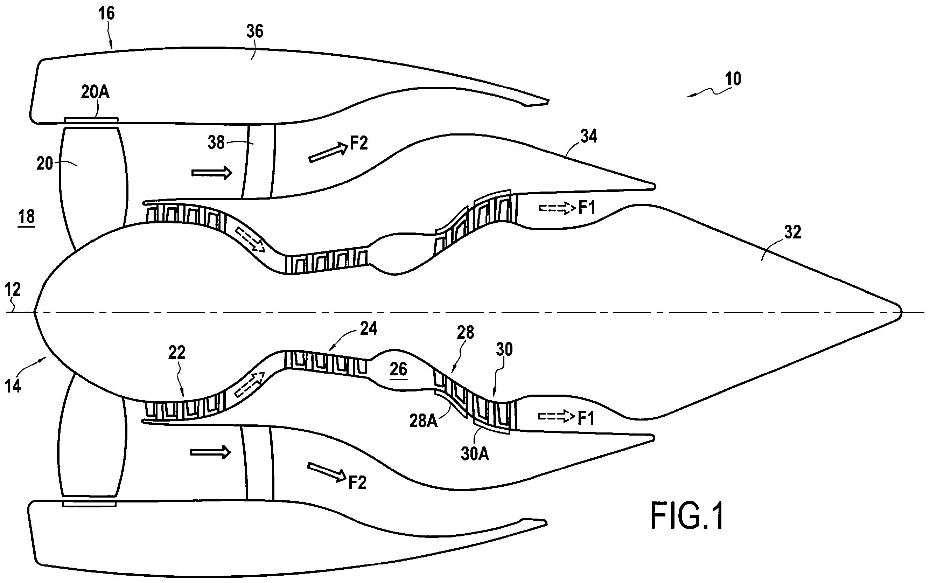

La figure 1 montre de façon très schématique une architecture de turbomachine d'aéronef, en l'espèce un turboréacteur à double flux, au niveau d'une paroi de laquelle est mis en œuvre un revêtement à gradient de propriété selon l'invention.

Classiquement, un tel turboréacteur à double flux 10 possède un axe longitudinal 12 et se compose d'un moteur à turbine à gaz 14 et d'une nacelle annulaire 16 centrée sur l'axe 12 et disposée concentriquement autour du moteur.

D'amont en aval, selon le sens d'écoulement d'un flux d'air ou de gaz traversant le turboréacteur, le moteur 14 comprend une entrée d'air 18, une soufflante 20, un compresseur basse-pression 22, un compresseur haute-pression 24, une chambre de combustion 26, une turbine haute-pression 28 et une turbine basse-pression 30, chacun de ces éléments étant disposé selon l'axe longitudinal 12. L'éjection des gaz produits par le moteur est effectuée au travers d'une tuyère se composant d'un corps central annulaire 32 centré sur l'axe longitudinal 12, d'un capot primaire annulaire 34 entourant de façon coaxiale le corps central pour délimiter avec celui-ci un canal annulaire d'écoulement du flux primaire F1, et d'un capot secondaire annulaire 36 entourant de façon coaxiale le capot primaire pour délimiter avec celui-ci un canal annulaire d'écoulement du flux secondaire F2 coaxial au canal d'écoulement primaire et dans lequel sont disposées des aubes redresseuses 38 (dans l'exemple de réalisation illustré, la nacelle 16 du turboréacteur et le capot secondaire 36 de la tuyère sont une seule et même pièce). Les capots primaires et secondaires intègrent notamment les carters intermédiaires de turbines 28A et 30A entourant les aubes mobiles des rotors de turbines et le carter de soufflante 20A entourant les aubes mobiles du rotor de soufflante.

Selon l'invention, il est proposé d'apposer, par fabrication additive, sur les parois internes de carters faisant face à des aubes mobiles de rotor, un revêtement à gradient de propriété qui se présente sous la forme d'un échafaudage tridimensionnel de filaments d'un matériau thermodurcissable formant entre eux un réseau ordonné de canaux. Selon la configuration de réseau envisagé, des interconnections entre les canaux peuvent exister de manière régulière lors de la superposition des différentes couches du revêtement destinées à générer ces différents canaux. Cette paroi est préférentiellement une paroi d'une turbomachine, telle qu'un turboréacteur d'avion, montée en périphérie immédiate des aubes mobiles de rotor et plus particulièrement la paroi interne du carter de soufflante 20A en composite tissé, préférentiellement 3D, disposée en périphérie des aubes de soufflante. Toutefois, un dépôt sur le ou les carters de turbine 28A, 30A peut aussi être envisagé, sous réserve bien entendu que le matériau thermodurcissable à base métallique ou céramique présente des propriétés adaptées à l'environnement à haute température auquel il est alors soumis.

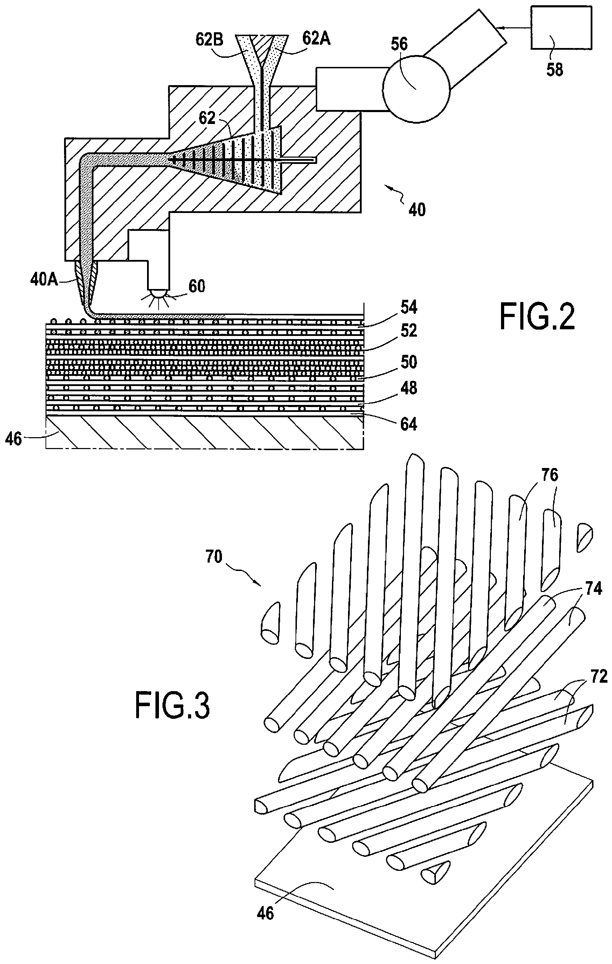

La figure 2 montre de façon schématique un exemple de système de dépôt de matière filamentaire 40 permettant de fabriquer le revêtement à gradient de propriété de l'invention. Par matériau à gradient de propriété on entend un matériau qui implique autant une variation régulière exempte de discontinuités (exemple de réalisation non décrit) qu'un empilement de plusieurs couches distinctes avec des propriétés différentes (exemple de réalisation de l'invention).

Ce système de dépôt filamentaire a pour objet de déposer, de préférence en liaison avec un circuit de contrôle en pression et en température interne au système, le matériau thermodurcissable par extrusion via une buse d'éjection 40A de forme et dimension calibrées tout d'abord sur le substrat 46 puis successivement sur les différentes couches superposées créées 48, 50, 52, 54, ayant de par leurs structures distinctes, chacune une propriété différente, jusqu'à obtention de l'épaisseur désirée pour ce revêtement.

Le système de dépôt filamentaire 40 suit une trajectoire de dépôt imprimée par un ensemble mécanique commandé 56, typiquement une machine multiaxes (au moins à 3 axes) ou préférentiellement un robot, lequel est contrôlé par une unité de gestion 58, typiquement un microcontrôleur ou un microordinateur, à laquelle il est relié assurant la commande du système de dépôt filamentaire et contrôlant en tout point de la surface traitée à la fois l'arrangement filamentaire et la porosité du revêtement obtenu. Une lampe de chauffage ou tout autre élément analogue 60, monté à proximité de la buse d'éjection 40A, peut être utilisé pour stabiliser le matériau déposé et éviter le fluage au cours du dépôt.

L'alimentation en matériau thermodurcissable est assurée à partir d'une vis à extrusion conique 62 permettant de mélanger plusieurs composants pour former un fluide thixotrope ayant l'aspect d'une pâte. La vis d'extrusion conique permet d'assurer un mélange adéquat des composants et homogène (tout au long de l'opération de dépôt), pour obtenir in fine un matériau fluide à haute viscosité qui va être déposé par la buse calibrée. Durant cette opération, il faut éviter la génération de bulles d'air qui forment autant de défaut dans le filament imprimé et il faut éviter une instabilité de l'écoulement du matériau fluide ; il est donc nécessaire de pousser de manière très progressive le matériau. On notera qu'avec une telle vis à extrusion conique le changement de constitution du matériau thermodurcissable déposé et formant les différentes couches 48-54, peut être réalisé aisément par un simple contrôle des différents composants introduits successivement dans la vis à extrusion conique qui comporte au moins deux entrées séparées 62A, 62B pour l'introduction simultanée d'au moins deux composants.

La figure 3 illustre en perspective éclatée une petite partie d'un échafaudage tridimensionnel 70 de filaments 72, 74, 76, avantageusement cylindriques, de matériau thermodurcissable permettant la réalisation du revêtement de l'invention sous la forme d'un réseau ordonné de canaux (micro-treillis) de nature à conférer le gradient de propriété recherché au travers des couches superposées de ce revêtement.

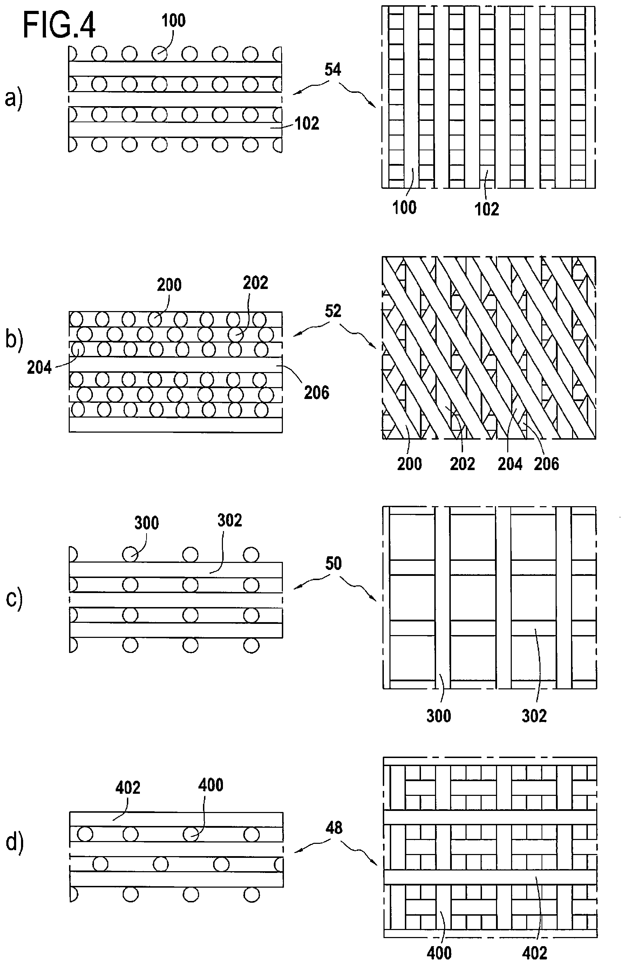

En effet et comme le montrent les différentes configurations des figures 4A, 4B, 4C et 4D, le revêtement de l'invention est formé par la superposition par fabrication additive, depuis la paroi interne du carter jusqu'à la surface extérieure, de différentes couches de matériau ayant chacune une épaisseur donnée et une structure distincte leur conférant à chacune une propriété différente. Chaque couche de ce revêtement, imprimée à partir du système de dépôt filamentaire précité, est constituée d'un échafaudage tridimensionnel de filaments de matériau thermodurcissable formant un réseau ordonné de canaux.

Sur la figure 4A est illustré un échafaudage tridimensionnel de filaments 100, 102 destiné à former la couche externe 54 du revêtement et constitué de couches de filaments superposées dont les filaments d'une couche donnée sont orientés alternativement à 0° ou à 90° sans décalage dans la superposition des filaments ayant une même direction d'orientation.

L'objet de cette première couche 54 est d'assurer l'abradabilité du revêtement au passage des aubes mobiles (notamment durant le rodage du moteur) tout en satisfaisant aux conditions aérodynamiques de la turbomachine. Pour ce faire, le matériau thermodurcissable utilisé pour cette première couche est un matériau abradable dans l'épaisseur duquel sont formés des motifs spécifiques ayant des porosités (pourcentage de vide) dimensionnées pour permettre le passage ou la dissipation des fluctuations aérodynamiques (voir leurs modifications) et/ou des ondes acoustiques. Typiquement une porosité supérieure à 85% pour une taille de filaments comprise entre 50 et 250 microns convient à cette fonction d'abradabilité. Ces motifs peuvent aussi consister en des perforations ou des rainurages de dimensions inférieures à 1,5 mm permettant en outre d'améliorer les marges aérodynamiques.

L'intérêt de cette fonction d'abradabillité sur la couche de surface du revêtement est de rendre l'ensemble rotor-carter compatible avec les déformations que subissent les aubes mobiles en rotation lorsque ces dernières sont soumises à la somme des efforts aérodynamiques et centrifuges.

Par matériau abradable on entend la capacité du matériau à se disloquer (ou s'éroder) en fonctionnement au contact d'une pièce en regard (faible résistance au cisaillement) et sa résistance à l'usure suite aux impacts de particules ou corps étrangers qu'il est amené à ingérer en fonctionnement. Un tel matériau doit en outre garder voire favoriser de bonnes propriétés aérodynamiques, présenter des résistances à l'oxydation et à la corrosion suffisantes et un coefficient de dilatation thermique du même ordre que la couche ou le substrat sur lequel il est déposé, en l'espèce le matériau composite tissé formant les parois de carter.

Sur la figure 4B est illustré un échafaudage tridimensionnel de filaments 200, 202, 204, 206 destiné à former la couche 52 du revêtement et constitué de couches de filaments superposées présentant une direction d'orientation des filaments décalée ou non d'un même écart angulaire, par exemple comprise entre 20° et 40° (cette valeur d'inclinaison ne saurait être limitative), à chaque couche.

L'objet de cette deuxième couche 52 sur laquelle la première couche 54 est déposée est d'assurer la dissipation de l'énergie de l'onde acoustique. Pour ce faire, l'échafaudage tridimensionnel peut comporter des canaux ou micro canaux dont des tailles de pores sont typiquement comprises entre 50 et 400 microns et la porosité supérieure à 60%. Il n'est pas nécessaire que le matériau thermodurcissable utilisé pour la fabrication de cette deuxième couche 52 soit le matériau abradable utilisé par la première couche 54. Toutefois, le recours à un même matériau pour l'ensemble du revêtement est possible et évite d'avoir à changer sa composition entre chaque couche.

Cette deuxième couche 52 doit bien entendu supporter les contraintes mécaniques et environnementales afférentes notamment aux impacts de particules et conserver les performances aérodynamiques de la turbomachine.

Sur la figure 4C est illustré un échafaudage tridimensionnel de filaments 300, 302 destiné à former la troisième couche 50 du revêtement et constitué de couches superposées dont les filaments sont orientés alternativement à 0° ou à 90° sans décalage entre les couches ayant une même direction d'orientation des filaments cylindriques, comme pour l'échafaudage tridimensionnel de la première couche 54, mais avec un espacement entre les filaments plus important, de l'ordre de 2 fois plus important dans l'exemple illustré. Typiquement une porosité supérieure à 70% pour une taille de filaments supérieure à 250 microns convient à réaliser cette fonction de drainage.

Le matériau thermodurcissable utilisé pour la fabrication de cette troisième couche 50 peut ou non être le matériau abradable utilisé par la première couche 54 et peut ou non être différent de celui utilisé pour la fabrication de la deuxième couche 52.

L'objet de cette troisième couche 50 sur laquelle la deuxième couche 52 est déposée est d'assurer le drainage des fluides ingérés par la turbomachine et traversant le revêtement. Pour ce faire, cette couche à fonction de drainage comportera avantageusement des motifs spécifiques avec des canaux orientant l'évacuation des fluides vers des zones favorables (drains situés à 6 heures par rapport au flux) et présentant une taille de canaux supérieure à 500 microns.

Comme la deuxième couche 52, cette troisième couche 50 doit supporter les contraintes mécaniques et environnementales afférentes notamment aux impacts de particules et conserver les performances aérodynamiques de la turbomachine.

On notera que la présence de cette troisième couche 50 n'est pas forcément requise, la fonction de drainage pouvant être assurée avantageusement par ajout d'une couche avec propriété hydrophobe située sous la première couche 54.

Et sur la figure 4D est illustré un échafaudage tridimensionnel de filaments 400, 402 destiné à former la quatrième et dernière couche 48 du revêtement et constitué de couches superposées dont les filaments d'une couche donnée sont orientés alternativement à 0° ou à 90° et présentent un décalage dans la superposition des filaments ayant une même direction d'orientation. Ce décalage est comme illustré de préférence égal à la moitié de la distance entre deux filaments. Typiquement une porosité inférieure à 60% pour une taille de filaments inférieure à 400 microns convient à réaliser cette fonction balistique.

Le matériau thermodurcissable utilisé pour la fabrication de cette quatrième couche 48 peut ou non être le matériau abradable utilisé par la première couche 54 et peut ou non être différent de celui utilisé pour la fabrication des deuxième 52 ou troisième 50 couches.

L'objet de cette dernière couche 48 déposée sur le carter 46 et sur laquelle la troisième couche 50 est elle-même déposée est de renforcer la tenue mécanique de l'ensemble du revêtement et de permettre l'absorption de l'énergie balistique résultant d'un impact de volatile ou d'ingestion de grêle voire d'une perte d'aube. Cette dernière couche doit aussi supporter les contraintes mécaniques et environnementales afférentes notamment aux impacts de particules.

On notera que comme pour la troisième couche 50, la présence de cette dernière couche 48 n'est pas forcément requise, la fonction d'absorption d'énergie pouvant être assurée avantageusement au sein de la couche acoustique 52 ou directement par le carter 46.

Pour toutes ces couches, il conviendra de s'assurer de l'adhérence à la couche précédente et/ou à la couche suivante pouvant être directement le carter (compatibilité des coefficients de dilatation thermique des différentes couches et en particulier celui du matériau du carter).

Il convient de noter qu'une couche supplémentaire d'interface 64 (voir la figure 2) peut être ajoutée en préalable à l'élaboration de ces échafaudages tridimensionnels de filaments. En effet, le carter de soufflante est un carter composite tissé dont la géométrie tridimensionnelle présente généralement des déviations (défauts de forme) par rapport à la surface idéale calculée, du fait notamment de la tendance à la formation de lobes liée au procédé de tissage utilisé (classiquement de type poly-flex). Or, le rattrapage de ces défauts implique actuellement des opérations complexes et couteuses. Il est donc possible avec le dispositif de déposer un matériau de rattrapage de jeu (résine ou autre) afin d'obtenir une géométrie connue. L'intérêt de cette étape préalable est de revenir à une surface de dépôt contrôlée, précisément définie et répondant aux contraintes de formes nécessaires pour assurer les bons jeux aérodynamiques de la zone moteur de la turbomachine.

Il convient aussi de noter que des couches supplémentaires de matériau abradable peuvent être ajoutées localement sur la première couche 54 afin d'assurer l'axisymétrie de la surface extérieure du revêtement. En effet, les carters de soufflante présentent souvent une géométrie non axisymétrique.

Le matériau abradable extrudé par la ou les buses calibrées est avantageusement un matériau thermodurcissable à haute viscosité (dit aussi fluide) qui est dépourvu de solvant dont l'évaporation génère comme il est connu un fort retrait. Ce matériau est de préférence une résine à cinétique de polymérisation lente et écoulement filamentaire stable se présentant sous la forme d'un mélange thixotrope qui présente donc l'avantage d'un retrait beaucoup plus faible entre l'impression sur le substrat (juste après extrusion du matériau) et la structure finale (une fois chauffée et la polymérisation complète).

Un exemple de matériau abradable utilisé dans le cadre du procédé de l'invention est un matériau se présentant sous forme pâteuse et constitué de trois composants à savoir une base polymère, par exemple une résine époxyde (se présentant comme une pâte à modeler bleue), un agent de réticulation ou accélérateur (se présentant comme une pâte à modeler blanche) et une gelée de pétrole de couleur translucide (par exemple de la vaseline^{™}). Les composants accélérateur/base sont répartis selon un rapport pondéral de la base à l'accélérateur compris entre 1 :1 et 2 :1 et la gelée de pétrole est présente entre 5 et 15% (typiquement 10%) en poids du poids total du matériau. La base peut en outre comporter des microsphères de verres creuses d'un diamètre déterminé pour assurer la porosité désirée tout en permettant d'accroitre les performances mécaniques de l'échafaudage imprimé. L'intérêt de l'introduction de la gelée de pétrole réside dans la réduction de la viscosité de la résine ainsi que de la cinétique de réaction de l'abradable, ce qui rend sa viscosité plus stable durant le temps de l'impression et facilite ainsi l'écoulement du matériau. (La viscosité est directement liée à la pression d'extrusion nécessaire pour assurer la vitesse d'extrusion adéquate pour conserver la qualité de l'impression).

A titre d'exemple, un tel rapport de 2 :1 donne un matériau abradable comprenant 0.7g d'accélérateur et 1.4g de base, auquel il convient d'ajouter 0.2g de gelée de pétrole.

Pour les couches autres que la première couche 54 et lorsque que le matériau thermodurcissable utilisé pour l'ensemble des échafaudages tridimensionnels de filaments n'est pas le matériau abradable, un matériau à base métallique ou céramique peut être utilisé valablement.

Ainsi la présente invention permet une impression rapide et stable permettant de reproduire efficacement des structures performantes à fonctions prédéfinies et caractéristiques contrôlées (rugosité, aspect, taux d'ouverture) ayant une faible taille de filament et un faible poids particulièrement intéressantes aux vues des contraintes fortes rencontrées en aéronautique.

## Revendications

1. Revêtement à gradient de propriété destiné à être apposé par fabrication additive sur une paroi interne d'un carter (20A, 46) montée en périphérie d'aubes mobiles de rotor de turbomachine, **caractérisé en ce qu'**il comporte en couches superposées d'une surface extérieure dudit revêtement à ladite paroi interne de carter :
• une première couche (54) constituée par un échafaudage tridimensionnel de filaments (100, 102) d'un matériau abradable formant un réseau ordonné de canaux ou micro canaux dont des tailles de pores sont comprises entre 50 et 250 microns et la porosité supérieure à 85%, et
• une deuxième couche (52) ayant une fonction de dissipation d'énergie des ondes acoustiques frappant ladite surface extérieure dudit revêtement et constituée par un échafaudage tridimensionnel de filaments (200, 202, 204, 206) d'un premier matériau thermodurcissable formant un réseau ordonné de canaux ou micro canaux dont des tailles de pores sont comprises entre 50 et 400 microns et la porosité supérieure à 60%.

2. Revêtement à gradient de propriété selon la revendication 1, **caractérisé en ce que** les filaments de ladite première couche sont orientés alternativement à 0° ou à 90° sans décalage dans la superposition des filaments ayant une même direction d'orientation.

3. Revêtement à gradient de propriété selon la revendication 1, **caractérisé en ce que** les filaments de ladite deuxième couche sont orientés alternativement avec une direction d'orientation des filaments décalée ou non d'un même écart angulaire, typiquement compris entre 20° et 40°.

4. Revêtement à gradient de propriété selon l'une quelconque des revendications 1 à 3, **caractérisé en ce qu'**il comporte en outre une couche (64) d'un matériau de rattrapage de jeu déposé directement sur la dite paroi interne de carter pour obtenir une surface de dépôt de géométrie connue.

5. Revêtement à gradient de propriété selon l'une quelconque des revendications 1 à 4, **caractérisé en ce qu'**il comporte en outre une troisième couche (50) ayant une fonction de drainage des fluides traversant ledit revêtement et constituée par un échafaudage tridimensionnel de filaments d'un deuxième matériau thermodurcissable formant un réseau ordonné de canaux ou micro canaux dont des tailles de pores sont supérieures à 250 microns et la porosité supérieure à 70%.

6. Revêtement à gradient de propriété selon la revendication 5, **caractérisé en ce que** ladite troisième couche (50) comporte des motifs spécifiques avec des canaux orientant l'évacuation des fluides traversant ledit revêtement vers des zones déterminées et présentant une taille de canaux supérieure à 500 microns.

7. Revêtement à gradient de propriété selon la revendication 6, **caractérisé en ce que** les filaments de ladite troisième couche sont orientés alternativement à 0° ou à 90° sans décalage dans la superposition des filaments ayant une même direction d'orientation.

8. Revêtement à gradient de propriété selon l'une quelconque des revendications 1 à 7, **caractérisé en ce qu'**il comporte en outre une quatrième couche (48) ayant une fonction d'absorption d'énergie balistique résultant d'un impact de volatile, d'une ingestion de grêle voire d'une perte d'aube et constituée par un échafaudage tridimensionnel de filaments d'un troisième matériau thermodurcissable formant un réseau ordonné de canaux ou micro canaux dont des tailles de pores sont inférieures à 400 microns et la porosité inférieure à 60%.

9. Revêtement à gradient de propriété selon la revendication 8, **caractérisé en ce que** les filaments de ladite quatrième couche sont orientés alternativement à 0° ou à 90° et présentent un décalage dans la superposition des filaments ayant une même direction d'orientation.

10. Revêtement à gradient de propriété selon l'une quelconque des revendications 1 à 9, **caractérisé en ce qu'**il comporte en outre au moins une couche supplémentaire d'un matériau abradable ajoutée localement sur ladite première couche (54) pour tenir compte d'une géométrie non axisymétrique dudit carter.

11. Revêtement à gradient de propriété selon l'une quelconque des revendications 1 à 10, **caractérisé en ce que** ledit matériau abradable est un mélange thixotrope dépourvu de solvant et constitué d'une base polymère et d'un agent de réticulation dans un rapport pondéral de base polymère à agent de réticulation compris entre 1 :1 et 2 :1, et d'un composant de facilitation de l'écoulement, typiquement une gelée de pétrole présente entre 5 et 15% en poids du poids total dudit mélange thixotrope.

12. Revêtement à gradient de propriété selon la revendication 11, **caractérisé en ce que** lesdits premier, deuxième et troisième matériaux thermodurcissables sont constitués dudit matériau abradable.

13. Revêtement à gradient de propriété selon l'une quelconque des revendications 1 à 12, **caractérisé en ce que** ledit carter est un carter de soufflante de turbomachine en matériau composite tissé.

## Patentansprüche

1. Beschichtung mit einem Eigenschaftsgradienten, die dazu bestimmt ist, durch additive Fertigung auf einer Innenwand eines Gehäuses (20A, 46) angebracht zu werden, das am Umfang von beweglichen Turbomaschinenrotorschaufeln montiert ist, **dadurch gekennzeichnet, dass** sie in von einer äußeren Oberfläche der Beschichtung zur Gehäuseinnenwand überlagerten Schichten Folgendes umfasst:
- eine erste Schicht (54), die aus einem dreidimensionalen Gerüst von Filamenten (100, 102) aus einem Abriebmaterial besteht, die ein geordnetes Netz von Kanälen oder Mikrokanälen bilden, deren Porengrößen zwischen 50 und 250 Mikron betragen und deren Porosität größer als 85 % ist, und
- eine zweite Schicht (52), die eine Energiedissipationsfunktion der akustischen Wellen aufweist, die auf die äußere Oberfläche der Beschichtung stoßen, und aus einem dreidimensionalen Gerüst von Filamenten (200, 202, 204, 206) aus einem ersten wärmehärtbaren Material besteht, die ein geordnetes Netz von Kanälen oder Mikrokanälen bilden, deren Porengrößen zwischen 50 und 400 Mikron betragen und deren Porosität größer als 60 % ist.

2. Beschichtung mit einem Eigenschaftsgradienten nach Anspruch 1, **dadurch gekennzeichnet, dass** die Filamente der ersten Schicht abwechselnd in 0° oder in 90° ohne Versatz in der Überlagerung der Filamente, die eine gleiche Ausrichtungsrichtung aufweisen, ausgerichtet sind.

3. Beschichtung mit einem Eigenschaftsgradienten nach Anspruch 1, **dadurch gekennzeichnet, dass** die Filamente der zweiten Schicht abwechselnd mit einer um einen gleichen Winkelabstand von typischerweise zwischen 20° und 40° versetzten oder nicht versetzten Ausrichtungsrichtung der Filamente ausgerichtet sind.

4. Beschichtung mit einem Eigenschaftsgradienten nach einem der Ansprüche 1 bis 3, **dadurch gekennzeichnet, dass** sie ferner eine Schicht (64) aus einem Spielausgleichsmaterial umfasst, das direkt auf der Gehäuseinnenwand aufgebracht ist, um eine Aufbringungsoberfläche mit bekannter Geometrie zu erhalten.

5. Beschichtung mit einem Eigenschaftsgradienten nach einem der Ansprüche 1 bis 4, **dadurch gekennzeichnet, dass** sie ferner eine dritte Schicht (50) umfasst, die eine Funktion zum Ablassen der Fluide, welche die Beschichtung durchqueren, aufweist und aus einem dreidimensionalen Gerüst von Filamenten aus einem zweiten wärmehärtbaren Material besteht, die ein geordnetes Netz von Kanälen oder Mikrokanälen bilden, deren Porengrößen größer als 250 Mikron sind und deren Porosität größer als 70 % ist.

6. Beschichtung mit einem Eigenschaftsgradienten nach Anspruch 5, **dadurch gekennzeichnet, dass** die dritte Schicht (50) spezifische Motive mit Kanälen umfasst, die das Abführen der Fluide, welche die Beschichtung durchqueren, hin zu bestimmten Zonen ausrichten und eine Kanalgröße von größer als 500 Mikron aufweisen.

7. Beschichtung mit einem Eigenschaftsgradienten nach Anspruch 6, **dadurch gekennzeichnet, dass** die Filamente der dritten Schicht ohne Versatz in der Überlagerung der Filamente, die eine gleiche Ausrichtungsrichtung aufweisen, abwechselnd in 0° oder in 90° ausgerichtet sind.

8. Beschichtung mit einem Eigenschaftsgradienten nach einem der Ansprüche 1 bis 7, **dadurch gekennzeichnet, dass** sie ferner eine vierte Schicht (48) umfasst, die eine Funktion zur Absorption ballistischer Energie aufweist, die aus einem Vogelschlag, einem Hagelschlag oder sogar einem Schaufelverlust resultiert, und aus einem dreidimensionalen Gerüst von Filamenten aus einem dritten wärmehärtbaren Material besteht, die ein geordnetes Netz von Kanälen oder Mikrokanälen bilden, deren Porengrößen kleiner als 400 Mikron sind und deren Porosität kleiner als 60 % ist.

9. Beschichtung mit einem Eigenschaftsgradienten nach Anspruch 8, **dadurch gekennzeichnet, dass** die Filamente der vierten Schicht abwechselnd in 0° oder in 90° ausgerichtet sind und einen Versatz in der Überlagerung der Filamente aufweisen, die eine gleiche Ausrichtungsrichtung aufweisen.

10. Beschichtung mit einem Eigenschaftsgradienten nach einem der Ansprüche 1 bis 9, **dadurch gekennzeichnet, dass** sie ferner mindestens eine zusätzliche Schicht aus einem Abriebmaterial umfasst, die lokal auf der ersten Schicht (54) hinzugefügt ist, um einer nicht axialsymmetrische Geometrie des Gehäuses Rechnung zu tragen.

11. Beschichtung mit einem Eigenschaftsgradienten nach einem der Ansprüche 1 bis 10, **dadurch gekennzeichnet, dass** das Abriebmaterial ein thixotropes Gemisch ist, das kein Lösungsmittel aufweist und aus einer Polymerbasis und einem Vernetzungsmittel mit einem Gewichtsverhältnis von Polymerbasis zu Vernetzungsmittel von zwischen 1 : 1 und 2 : 1 und einer Komponente zur Verbesserung der Fließfähigkeit, typischerweise einer Vaseline, besteht, die mit 5 bis 15 Gew.-%, bezogen auf das Gesamtgewicht des thixotropen Gemischs, vorhanden ist.

12. Beschichtung mit einem Eigenschaftsgradienten nach Anspruch 11, **dadurch gekennzeichnet, dass** das erste, zweite und dritte wärmehärtbare Material aus dem Abriebmaterial bestehen.

13. Beschichtung mit einem Eigenschaftsgradienten nach einem der Ansprüche 1 bis 12, **dadurch gekennzeichnet, dass** das Gehäuse ein Turbomaschinengebläsegehäuse aus gewebtem Verbundstoff ist.

## Claims

1. Property gradient coating intended to be applied by additive manufacture to an inner wall of a casing (20A, 46) mounted on the periphery of moving blades of a turbomachine rotor, **characterized in that** it comprises superimposed layers from an outer surface of said coating to said casing inner wall:
• a first layer (54) consisting of a three-dimensional scaffolding of filaments (100, 102) of an abradable material forming an ordered network of channels or microchannels whose pore sizes are between 50 and 250 microns and whose porosity is greater than 85%, and
• a second layer (52) having a function of dissipating energy from acoustic waves striking said outer surface of said coating and consisting of a three-dimensional scaffolding of filaments (200, 202, 204, 206) of a first thermosetting material forming an ordered network of channels or microchannels whose pore sizes are between 50 and 400 microns and whose porosity is greater than 60%.

2. Property gradient coating as claimed in claim 1, **characterized in that** the filaments of said first layer are alternately oriented at 0° or 90° without any offset in the superposition of filaments having a same direction of orientation.

3. Property gradient coating as claimed in claim 1, **characterized in that** the filaments of said second layer are alternately oriented with a direction of orientation of the filaments offset or not by a same angular deviation, typically between 20° and 40°.

4. Property gradient coating as claimed in any one of claims 1 to 3, **characterized in that** it further comprises a layer (64) of a clearance compensating material deposited directly on said inner casing wall to obtain a deposition surface of known geometry.

5. Property gradient coating as claimed in any one of claims 1 to 4, **characterized in that** it further comprises a third layer (50) having a function of draining fluids passing through said coating and consisting of a three-dimensional scaffolding of filaments of a second thermosetting material forming an ordered network of channels or microchannels whose pore sizes are greater than 250 microns and whose porosity is greater than 70%.

6. Property gradient coating as claimed in claim 5, **characterized in that** said third layer (50) has specific patterns with channels directing the evacuation of fluids passing through said coating to determined areas and having a channel size greater than 500 microns.

7. Property gradient coating as claimed in claim 6, **characterized in that** the filaments of said third layer are alternately oriented at 0° or 90° without any offset in the superposition of filaments having a same direction of orientation.

8. Property gradient coating as claimed in any one of claims 1 to 7, **characterized in that** it further comprises a fourth layer (48) having a function of absorbing ballistic energy resulting from a volatile impact, hail ingestion, or even blade loss and consisting of a three-dimensional scaffolding of filaments of a third thermosetting material forming an ordered network of channels or microchannels whose pore sizes are less than 400 microns and whose porosity is less than 60%.

9. Property gradient coating as claimed in claim 8, **characterized in that** the filaments of said fourth layer are alternately oriented at 0° or 90° and have an offset in the superposition of filaments having a same direction of orientation.

10. Property gradient coating as claimed in any one of claims 1 to 9, **characterized in that** it further comprises at least one additional layer of an abradable material added locally on said first layer (54) to take into account a non-axisymmetric geometry of said casing.

11. Property gradient coating as claimed in any one of claims 1 to 10, **characterized in that** said abradable material is a solvent-free thixotropic mixture consisting of a polymer base and a cross-linking agent in a weight ratio of polymer base to cross-linking agent of between 1:1 and 2:1, and a flow facilitating component, typically a petroleum jelly, present between 5 and 15% by weight of the total weight of said thixotropic mixture.

12. Property gradient coating as claimed in claim 11, **characterized in that** said first, second and third thermosetting materials consist of said abradable material.

13. Property gradient coating as claimed in any one of claims 1 to 12, **characterized in that** said casing is a turbomachine fan casing of woven composite material.
